# EUROPEAN PATENT APPLICATION

(11) **EP 2 821 765 A1**
(43) Date of publication of application: **07.01.2015**
(21) Application number: 13754491.2
(22) Date of filing: 18.02.2013
(51) Int. Cl.: G01K 7/16, G01K 1/02

(54) **FILM-TYPE TEMPERATURE SENSOR**

(30) Priority: 29.02.2012 KR 20120020702
(71) Applicant: Yumin System Technology Co. Ltd., Gyeonggi-do 430-010 (KR); Yu, Hong Geun, Gyeonggi-do 441-759 (KR)
(72) Inventor: YU, Hong Geun, Gyeonggi-do 441-759 (KR)
(74) Representative: von Hirschhausen, Helge
(86) International application number: PCT/KR2013/001226
(87) International publication number: WO 2013/129795

(57) **Abstract**

Disclosed is a film type temperature sensor characterized in that an electrode configured to sense temperature is formed on a film by a printing method, and the film type temperature sensor is detachable from a connector module having a wireless transmission function, thus transmitting the sensed temperature values to a central control center located in a distant place and being used in a disposable type. The film type temperature sensor comprises a sensor film which includes a pair of temperature sensing terminals disposed close to each other on a base film, wherein the temperature sensing terminals are electrically connected through a wiring to a connection terminal formed at an end of the base film, and the temperature sensing terminals, the connection terminal and the wiring are formed by a printing method; and a connector module which is connected to the connection terminal of the sensor film.

## Description

### TECHNICAL FIELD

The present invention relates to a temperature sensor, and in particular to a film type temperature sensor characterized in that an electrode configured to sense temperature is formed on a film by a printing method, and a film type temperature sensor may be detachable from a wireless module, thus transmitting sensed temperature values to a distant place, and may be used in a disposable type.

### BACKGROUND ART

In a related structure of a temperature sensor, a film type thermistor temperature sensor is generally manufactured in such a way that a thermistor chip is inserted between metallic leads in the directions of the ends of a pair of metallic leads which use a metallic frame formed by a metal press method, and a pair of polyamide films are adhered to upper and lower sides by providing heat and pressure under vacuum environment.

The above-described related temperature sensor however has the following disadvantages.

Between the two sheets of polyamide films, a height difference may occur between a portion where a thermistor chip is installed and a portion where the thermistor chip is not installed, so it may be hard to adhere a film by applying constant force to all the portions. In order to resolve such a problem, it needs to use expensive facility, and mass production is impossible.

In order to connect to an external electronic circuit, it is inevitable to extend metallic leads to the outside of a film, so the metallic leads which extend to the outside may be cut if external force is repeatedly applied.

Also, a soldering process is necessary so as to insert a thermistor chip between the metallic leads when a thermistor chip is attached to the metallic leads, so the metallic leads should have predetermined sizes, which makes impossible to manufacture products with sizes below the predetermined sizes and products in a variety of shapes.

Since one thermistor chip is mounted on one film sensor, manufacture cots a lot, and in order to confirm a temperature sensed in a distance place, it needs to install an additional wired transmission module. When it needs to install a plurality of temperature sensors, wiring work may become complicated and difficult.

### DISCLOSURE OF THE INVENTION

Accordingly, it is an object of the present invention to provide a film type temperature sensor characterized in that an electrode configured to sense temperature is formed on a film by a printing method, and a film type temperature may be detachable from a connector module having wireless transmission function, thus transmitting sensed temperature values to a central control center of a distant place, and may be used in a disposable type.

To achieve the above objects, there is provided a film type temperature sensor, comprising a sensor film which includes a pair of temperature sensing terminals disposed close to each other on a base film, wherein the temperature sensing terminals are electrically connected through a wiring to a connection terminal formed at an end of the base film, and the temperature sensing terminals, the connection terminal and the wiring are formed by a printing method; and a connector module which is connected to the connection terminal of the sensor film and is configured to calculate temperature values using resistance values from the temperature sensing terminal and wirelessly transmit to a distant place, wherein the connector module is configured in such a way that an accommodation groove is formed at one side of a housing and is configured to accommodate a portion of the connection terminal of the sensor film, and a cover engaged to the housing about the hinge is provided on top of the accommodation groove and covers the accommodation groove, and at an inner side of the cover, there is provided a connection pin configured for an electrical connection through the connection terminal of the sensor film accommodated in the accommodation groove, and on a bottom of the accommodation groove, a pin groove is formed at a portion corresponding to the position of the connection pin, and wherein in the housing, there are provided a battery; a controller which is electrically connected to the connection pin and is configured to receive an electric resistance value of the temperature sensing terminal and calculate temperature values; and a wireless transmission unit which is configured to wirelessly transmit to a distant place the calculated temperature values outputted from the controller.

### ADVANTAGEOUS EFFECTS

The present invention has the following advantageous affects. First of all, since a soft film material is used, the film type temperature sensor of the present invention may be used for a human skin, a bent portion of facility, and a small size gap. Since an electrode configured to sense temperature is formed by a printing method, manufacture is easy, and cost is low.

The products may be manufactured in a variety of sizes. The film type temperature sensor of the present invention may be detachable from a wireless module, and the sensed temperature values may be wirelessly transmitted to a central control center located in a distance place, so complicated wiring is not necessary, and it is possible to instantly confirm any change of temperature from a distant place, thus providing a proper measure.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating an outside structure of a film type temperature sensor according to the present invention;

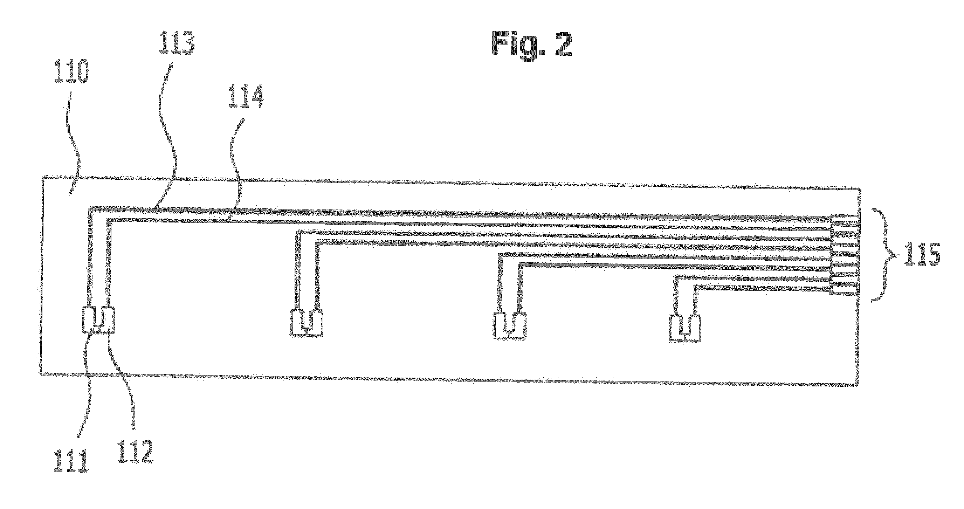

Figure 2 is a view illustrating a structure of a temperature sensing terminal formed on a base film and wiring according to the present invention;
Figure 3 is a view illustrating a structure of a connector module according to the present invention; and

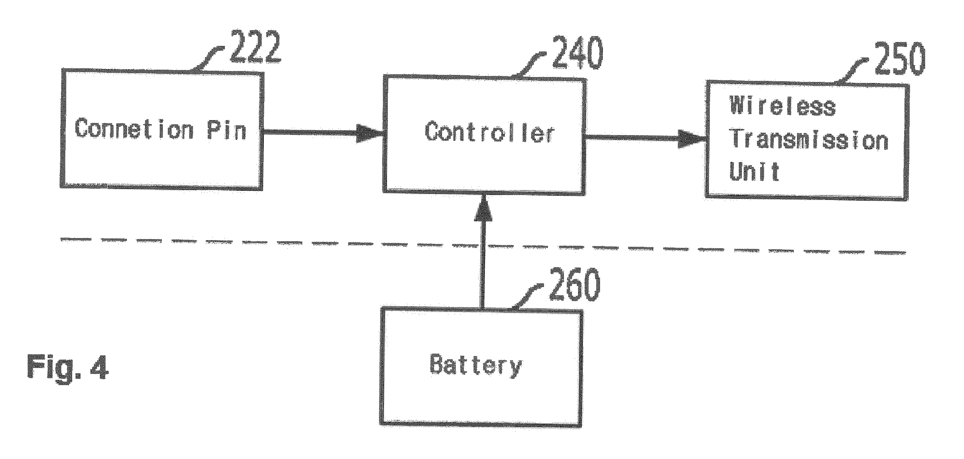

Figure 4 is a block diagram of a circuit installed in a connector module according to the present invention.

### MODES FOR CARRYING OUT THE INVENTION

The present invention will be described with reference to the accompanying drawings.

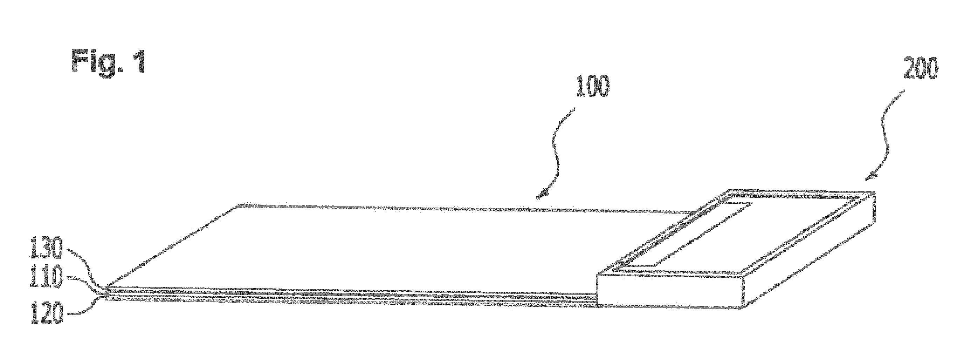

As illustrated in Figure 1, the film type temperature sensor according to the present invention comprises a sensor film 100 and a connector module 200.

The sensor film 100 comprises a base film 110, an adhering layer 120 formed on a lower surface of the base film 110, and an upper protection layer 130 which is stacked on top of the base film 110 and is configured to protect an upper surface.

The base film 110 is made from a film material such as PET, PE, PTFE, PVC, etc. On an upper surface of the base film 110, temperature sensing terminals 111 and 112 and wirings 113 and 114 are formed by a printing method, and on an end of the base film 110, a connection terminal 115 is formed by a printing method. The above printing method is performed using a silver compound or a pure, conductive ink, etc. having a size of 0~20Ω.

There are provided a pair of the temperature sensing terminals 111 and 112 which are close to each other. The temperature sensing terminals 111 and 112 are electrically connected through the wirings 113 and 114 to the connection terminal 115.

The temperature sensing terminals 111 and 112 may be provided in multiple numbers depending on the positions of temperature detections. Each of the temperature sensing terminals is exclusively connected to the connection terminal 115 by means of each of the wirings.

The upper protection layer 130 is stacked in an upward direction so as to protect the temperature sensing terminals 111 and 112, the wirings 113 and 114 and the connection terminal 115 which are formed on an upper surface of the base film 110. On a lower surface of the base film 110, there is provided a double-sided tape type adhering layer 120 for the sake of easier attachment to a skin, facility, etc.

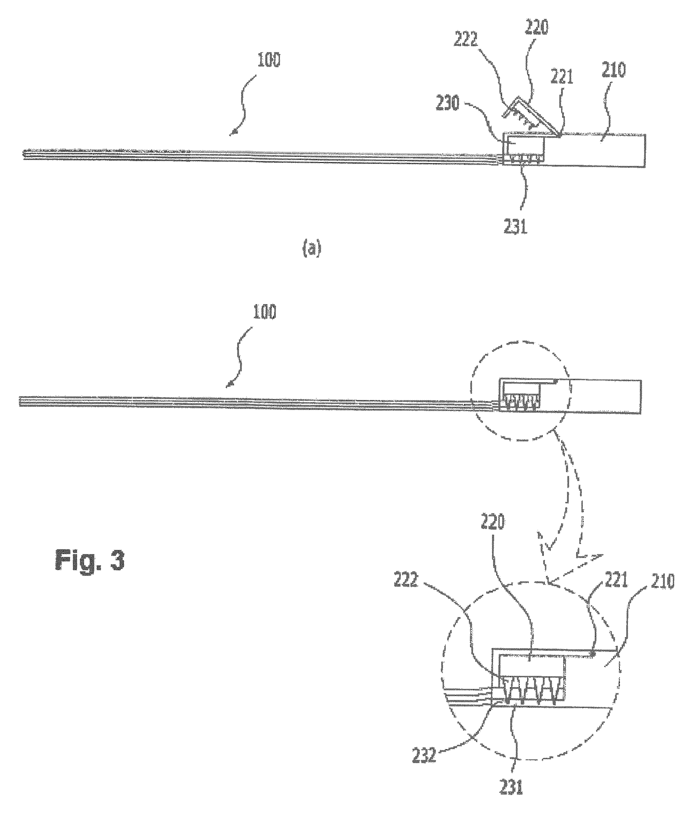

The connector module 200 is configured in such a way that it accommodates a portion of the connection terminal 115 of the base film 110 and senses temperature based on an electrical connection and wirelessly transmits the sensed temperature values to a distance place. As illustrated in Figure 3A, the front side of a housing 210 is open and becomes an accommodation groove 230 which is configured to accommodate an end of the sensor film 100. On top of the accommodation groove 230, there is provided a cover 220 which rotates about a hinge 220.

At an inner side of the cover 220, there is provided a conductive connection pin 222 which protrudes in a downward direction. The position and number of the connection pin 222 is determined based on the position and number of the connection terminal 115. On a bottom 231 of the accommodation groove 230, there is formed a pin groove 232 whose position is determined based on the position of the connection pin 222. The connection pin 222 provided in the cover 220 is inserted in the pin groove 232.

The cover 220 covers the accommodation groove 230 in a state that the portion of the connection terminal 115 of the base film 110 is accommodated in the accommodation groove 230 of the housing 210, so as illustrated in Figure 3B, the connection pin 222 passes through the portion of the connection terminal 115, and an end of the connection pin 222 is accommodated in the pin groove 232.

The connection pin 222 passes through the portion of the connection terminal 115 and is electrically connected to each other.

Since the connection pin 222 passes through a sensor film 100, it is possible to prevent the sensor film 100 from departing from the connector module 200.

In the housing 210, there are provided a controller 240 electrically connected to the connection pin 222 and configured to convert the resistance values of the temperature sensing terminals 111 and 112 into temperature values, a wireless transmission unit 250 configured to transmit to a distant place the temperature values outputted from the controller 240, and a battery 260.

The use and operations of the present invention will be described.

First of all, a user opens the cover 220 of the connector module 200 and accommodates an end where the connection terminal 115 of the sensor film 100 is formed, in the accommodation groove 230, and closes the cover 220, so the sensor film 100 and the connector module 200 are electrically connected.

The film type temperature sensor according to the present invention is attached to using the adhering layer 120 a portion where temperature will be sensed. In case of the portion where temperature will be sensed is a human skin or a facility, the film type temperature sensor of the present invention may be wound and attached like a pad or a band.

The controller 240 is configured to receive electric power from the battery 240 provided in the interior of the housing 210 and supply the electric power through the connection pin 222 so as to periodically sense temperature and confirm the resistance values of the temperature sensor terminals 111 and 112.

When heat is supplied to the temperature sensor terminals 111 and 112, the resistance values change. The controller 240 reads the changed resistance values and converts them into temperature values and transmits the temperature values through the wireless transmission unit 250 to the central control center which is located in a distant place.

When it needs to change the sensor film 100, the user opens the cover 220 and removes the sensor film 110, so the connector module 200 is separated from the fixed sensor film 100. A new sensor film 110 is connected to the separated connector module 200 in the way described earlier, so the new sensor film 110 can be continuously used.

The present invention is characterized in that the sensing film 100 may be used in a disposable type, and the connector module 200 may be repeatedly used.

## Claims

1. A film type temperature sensor, comprising:
a sensor film which includes a pair of temperature sensing terminals disposed close to each other on a base film, wherein the temperature sensing terminals are electrically connected through a wiring to a connection terminal formed at an end of the base film, and the temperature sensing terminals, the connection terminal and the wiring are formed by a printing method; and
a connector module which is connected to the connection terminal of the sensor film and is configured to calculate temperature values using resistance values from the temperature sensing terminal and wirelessly transmit to a distant place,
wherein the connector module is configured in such a way that an accommodation groove is formed at one side of a housing and is configured to accommodate a portion of the connection terminal of the sensor film, and a cover engaged to the housing about the hinge is provided on top of the accommodation groove and covers the accommodation groove, and at an inner side of the cover, there is provided a connection pin configured for an electrical connection through the connection terminal of the sensor film accommodated in the accommodation groove, and on a bottom of the accommodation groove, a pin groove is formed at a portion corresponding to the position of the connection pin, and
wherein in the housing, there are provided:
a battery;
a controller which is electrically connected to the connection pin and is configured to receive an electric resistance value of the temperature sensing terminal and calculate temperature values; and
a wireless transmission unit which is configured to wirelessly transmit to a distant place the calculated temperature values outputted from the controller.

2. The sensor of claim 1, wherein an adhering layer is formed on a lower surface of the base film.
